# EUROPÄISCHE PATENTSCHRIFT

(11) **EP 3 255 744 B1**
(45) Veröffentlichungstag und Bekanntmachung des Hinweises auf die Patenterteilung: **10.06.2020**
(21) Anmeldenummer: 17165249.8
(22) Anmeldetag: 06.04.2017
(51) Int. Cl.: H01T 13/40, H01T 13/54, F02P 13/00

(54) **VORKAMMERZÜNDKERZE**
PRE-CHAMBER SPARK PLUG
BOUGIE D'ALLUMAGE DE CHAMBRE DE PRÉCOMBUSTION

(30) Priorität: 06.06.2016 DE 102016209922
(43) Veröffentlichungstag der Anmeldung: 13.12.2017
(73) Patentinhaber: DKT Verwaltungs-GmbH, 74889 Sinsheim (DE)
(72) Erfinder: Maul, Georg, 88410 Bad Wurzach (DE); Kuhnert, Steffen, 69126 Heidelberg (DE)
(74) Vertreter: Patent- und Rechtsanwälte Ullrich & Naumann

(56) Entgegenhaltungen:
- EP-A1- 2 977 583
- CN-A- 105 041 453
- US-A1- 2015 267 631

## Beschreibung

Die vorliegende Erfindung betrifft eine Vorkammerzündkerze zur Zündung eines Kraftstoff-Luft-Gemisches in einem Verbrennungsmotor, insbesondere einem Gasmotor, mit einem Zündkerzenkörper, der ein Vorkammergehäuse und eine die Vorkammer zumindest teilweise verschließende Kappe aufweist, einer Masseelektrode und einer in die Vorkammer hineinragenden Mittelelektrode, wobei über einen in dem Vorkammergehäuse ausgebildeten und mit einem Ventil in Strömungsverbindung stehenden Durchgang Zusatzkraftstoff in die Vorkammer einbringbar ist.

Vorkammerzündkerzen der in Rede stehenden Art sind aus der Praxis bekannt. Bei Vorkammerzündkerzen handelt es sich um spezielle Zündkerzen für Verbrennungsmotoren, die nach dem Prinzip der Magerverbrennung arbeiten. Vorkammerzündkerzen weisen eine Vorkammer auf, die durch Überströmungsdurchgänge mit dem Brennraum eines Verbrennungsmotors zusammenwirkt. Das Kraftstoff-Luft-Gemisch wird mittels Zündfunken in der Vorkammer gezündet, wonach sich die Verbrennung in Form von Zündfackeln durch die Überströmungsdurchgänge in den Brennraum des Verbrennungsmotors fortsetzt und dort das eher zündunwillige, magere Gemisch entzündet.

Dabei sind in der Praxis des Weiteren Vorkammerzündkerzen bekannt, bei welchen Zusatzkraftstoff zur Entflammung sehr magerer Kraftstoff-Luft-Gemische in die Vorkammer vor der Zündung eindosierbar ist. Dadurch wird das Kraftstoff-Luft-Gemisch in der Vorkammer angereichert, was die Zünd- und Entflammungsbedingungen verbessert. Folglich sind diese Motoren mit einem größeren Luftüberschuss betreibbar, so dass der Wirkungsgrad steigt.

Eine solche Vorkammerzündkerze ist beispielsweise in der EP 1 936 143 A1 gezeigt. Dabei wird der Zusatzkraftstoff über einen in dem Zylinderkopf sowie in der Vorkammerzündkerze verlaufenden Versorgungskanal in die Vorkammer eingebracht. Das die Dosierung steuernde Ventil ist bei dieser Vorrichtung möglichst weit von dem Zylinderkopf und der Zündkerze beabstandet, um eine Überhitzung des Ventils zu vermeiden.

Bei den bekannten Vorkammerzündkerzen ist problematisch, dass der relativ lange Versorgungskanal ein großes Totvolumen darstellt, das nicht an der Verbrennung teilnimmt. Entsprechende Versorgungskanäle neigen im Betrieb zu Ablagerungen beziehungsweise Verschmutzungen, wodurch der Durchfluss des Zusatzkraftstoffes verringert und somit die Zündung negativ beeinflusst ist. Ein weiterer Nachteil besteht darin, dass diese Konstruktion sehr aufwendig ist, da der Versorgungskanal gegen den Brennraum, in welchem hohe Drücke und Temperaturen herrschen, abgedichtet werden muss.

Der vorliegenden Erfindung liegt daher die Aufgabe zugrunde, eine Vorkammerzündkerze der eingangs genannten Art derart auszugestalten und weiterzubilden, dass mit konstruktiv einfachen Mitteln eine sichere Zündung gewährleistet ist.

Erfindungsgemäß wird die voranstehende Aufgabe durch die Merkmale des Anspruchs 1 gelöst. Danach ist die in Rede stehende Vorkammerzündkerze dadurch gekennzeichnet, dass das Ventil zumindest an das Vorkammergehäuse angrenzt.

In erfindungsgemäßer Weise ist erkannt worden, dass die zugrundeliegende Aufgabe durch eine geschickte Positionierung des Ventils in verblüffend einfacher Weise gelöst werden kann. Dazu ist das Ventil derart angeordnet, dass es zumindest an das Vorkammergehäuse angrenzt. Durch diese konstruktive Maßnahme ist die Länge des Durchgangs äußerst gering, so dass die mit einem langen Versorgungskanal bzw. Totvolumen einhergehenden Probleme vermieden werden. Folglich ist ein gleichbleibender Durchfluss von Zusatzkraftstoff gewährleistet und sind des Weiteren die Abdichtmaßnahmen des Durchgangs erheblich vereinfacht. In weiter erfindungsgemäßer Weise ist dabei erkannt worden, dass entgegen einem Vorurteil der Fachwelt die Anordnung des Ventils in der Nähe des Brennraums zu keinen relevanten Auswirkungen betreffend eine Überhitzung des Ventils führt.

In weiter vorteilhafter Weise kann zumindest ein Teil des Ventils innerhalb des Vorkammergehäuses angeordnet sein, so dass die Länge des Durchgangs, der sich zwischen dem Ventil und dem Brennraum erstreckt, weiter minimiert ist. Insbesondere ist dabei denkbar, dass das Ventil vollständig innerhalb des Vorkammergehäuses angeordnet ist, um die Länge des Durchgangs auf ein Mindestmaß zu beschränken. Eine entsprechend ausgebildete Zündkerze hat den weiteren Vorteil, dass die gesamte Vorrichtung äußerst kompakt baut.

In besonders vorteilhafter Weise kann sich der Durchgang ausschließlich durch das Vorkammergehäuse hindurch erstrecken. Eine solche Konstruktion ist besonders einfach und somit kostengünstig in der Herstellung.

Alternativ oder zusätzlich kann der Durchgang unmittelbar in die Vorkammer münden. Dadurch ist der Zusatzkraftstoff direkt in die Vorkammer eindosierbar, wodurch die Zünd- und Entflammungsbedingungen wesentlich verbessert werden.

In besonders vorteilhafter Weise kann der Durchgang oberhalb der Mittelelektrode in die Vorkammer münden. Dabei ist unter dem Begriff "oberhalb" der Bereich der Vorkammer zu verstehen, der auf der von der Kappe abgewandten Seite der Mittelelektrode liegt.

Zur Versorgung des Ventils mit Zusatzkraftstoff kann das Ventil mit einer Zusatzkraftstoffzuführung in Strömungsverbindung stehen. Die Zusatzkraftstoffzuführung kann beispielsweise als Gaszuführung ausgebildet sein, wobei es sich um ein brennbares Gas, zum Beispiel Erdgas handeln kann. Im Konkreten kann die Zusatzkraftstoffzuführung als Kapillare ausgebildet sein. Des Weiteren ist denkbar, dass die Zusatzkraftstoffzuführung durch eine Zündkerzenhülse realisiert ist. Die Zündkerzenhülse kann in vorteilhafter Weise mit einem als Zusatzkraftstoff dienenden Gas gefüllt sein.

In weiter vorteilhafter Weise kann das Vorkammergehäuse aus zwei Gehäuseteilen bestehen. Dabei kann die Vorkammerzündkerze derart ausgestaltet sein, dass der Durchgang ausschließlich in dem mit der Kappe verbundenen Gehäuseteil realisiert ist. Dadurch wird erreicht, dass lediglich in einem Bauteil der Vorkammerzündkerze ein Durchgang zu realisieren ist, so dass die Vorkammerzündkerze insgesamt äußerst einfach in der Konstruktion und somit preiswert in der Herstellung ist.

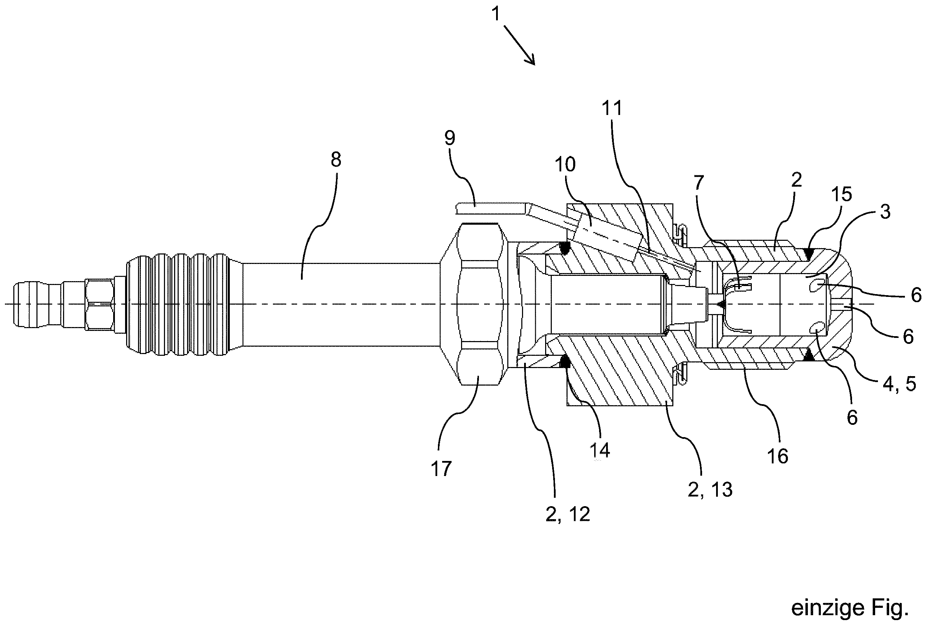

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt die
- einzige Fig.: in einer schematischen, teilweise geschnittenen Darstellung ein Ausführungsbeispiel einer erfindungsgemäßen Zündkerze.

Die einzige Figur zeigt eine erfindungsgemäße Vorkammerzündkerze in einer teilweise geschnittenen Darstellung.

Die Zündkerze umfasst einen Zündkerzenkörper 1, der ein Vorkammergehäuse 2 und eine die Vorkammer 3 zumindest teilweise umschließende Kappe 4 aufweist. Die Kappe 4 dient als Masseelektrode 5 und weist Überströmungsdurchgänge 6 auf, durch welche sich das entzündete Kraftstoff-Luft-Gemisch in Form von sog. Zündfackeln in den Brennraum des Verbrennungsmotors ausbreitet. Die Kappe 4 kann beispielsweise aus Nickel oder einer Nickellegierung bestehen.

Des Weiteren ist in der Vorkammer 3 eine Mittelelektrode 7 angeordnet, die über eine nicht dargestellte Versorgungsleitung mit elektrischer Spannung beaufschlagbar ist. Die Versorgungsleitung verläuft innerhalb des Isolators 8, der beispielsweise aus einer Keramik besteht und zumindest teilweise in dem Vorkammergehäuse 2 verläuft.

Von einer Zusatzkraftstoffzuführung 9 ist Zusatzkraftstoff über ein Ventil 10 und einen Durchgang 11 in die Vorkammer 3 einbringbar. Bei dem Zusatzkraftstoff kann es sich um Gas, insbesondere um Erdgas handeln. Im hier dargestellten Ausführungsbeispiel ist das Ventil 10 vollständig innerhalb des Vorkammergehäuses 2 angeordnet, so dass die Länge des Durchgangs 11 minimiert ist. Das von dem Durchgang 11 realisierte Totvolumen ist somit äußerst gering, so dass die durch Verschmutzung bzw. eine komplizierte Abdichtung auftretenden Probleme vermieden werden.

Das Vorkammergehäuse 2 besteht aus zwei Gehäuseteilen 12, 13, die über eine Schweißnaht 14 miteinander verbunden sind. Das Ventil 10 und der Durchgang 11 sind ausschließlich in dem zweiten Gehäuseteil 13 vorgesehen, der mit der Kappe 4 über eine weitere Schweißnaht 15 verbunden ist, wodurch die Konstruktion nochmals vereinfacht ist.

Weiterhin ist in der einzigen Figur deutlich zu erkennen, dass der Durchgang 11 "oberhalb" der Mittelelektrode 7 in die Vorkammer 3 mündet, nämlich auf der dem Brennraum abgewandten Seite der Mittelelektrode 7. Die Schweißnähte 14, 15 können beispielsweise durch Wolfram-Inertgas-Schweißen (WIG), Plasmaschweißen und/oder Laserschweißen hergestellt sein.

Die Zusatzkraftstoffzuführung 9 ist in dem hier dargestellten Ausführungsbeispiel als Kapillare ausgebildet und steht mit dem Ventil 10 in Strömungsverbindung. Alternativ ist denkbar, dass die Zusatzkraftstoffzuführung 9 durch eine gasbefüllte Zündkerzenhülse realisiert ist.

Des Weiteren ist an dem Vorkammergehäuse 2, nämlich dem zweiten Gehäuseteil 13, ein Verbindungsmittel 16 realisiert, um die Vorkammerzündkerze in dem Zylinderkopf zu fixieren. Das Verbindungsmittel 16 kann als Gewinde ausgestaltet sein. Zusätzlich ist an dem ersten Gehäuseteil 12 eine Montagehilfe 17 angeordnet. Bei der Montagehilfe 17 kann es sich beispielsweise um einen Sechskant handeln, so dass die Vorkammerzündkerze mit einem Schraubenschlüssel in den Zylinderkopf eingeschraubt werden kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Zündkerzenkörper
- 2: Vorkammergehäuse
- 3: Vorkammer
- 4: Kappe
- 5: Masseelektrode
- 6: Überströmungsdurchgang
- 7: Mittelelektrode
- 8: Isolator
- 9: Zusatzkraftstoffzuführung
- 10: Ventil
- 11: Durchgang
- 12: erster Gehäuseteil
- 13: zweiter Gehäuseteil
- 14: Schweißnaht
- 15: Schweißnaht
- 16: Verbindungsmittel
- 17: Montagehilfe

## Patentansprüche

1. Vorkammerzündkerze zur Zündung eines Kraftstoff-Luft-Gemisches in einem Verbrennungsmotor, insbesondere einem Gasmotor, mit einem Zündkerzenkörper (1), der ein Vorkammergehäuse (2) und eine die Vorkammer (3) zumindest teilweise verschließende Kappe (4) aufweist, einer Masseelektrode (5), einer in die Vorkammer (3) hineinragenden Mittelelektrode (7) und einem Ventil (10), wobei über einen in dem Vorkammergehäuse (2) ausgebildeten und mit dem Ventil (10) in Strömungsverbindung stehenden Durchgang (11) Zusatzkraftstoff in die Vorkammer (3) einbringbar ist,
**dadurch gekennzeichnet, dass** das Ventil (10) zumindest an das Vorkammergehäuse (2) angrenzt.

2. Vorkammerzündkerze nach Anspruch 1, **dadurch gekennzeichnet, dass** zumindest ein Teil des Ventils (10) innerhalb des Vorkammergehäuses (2) angeordnet ist.

3. Vorkammerzündkerze nach Anspruch 1 oder 2, **dadurch gekennzeichnet, dass** das Ventil (10) vollständig innerhalb des Vorkammergehäuses (2) angeordnet ist.

4. Vorkammerzündkerze nach einem der Ansprüche 1 bis 3, **dadurch gekennzeichnet, dass** sich der Durchgang (11) ausschließlich durch das Vorkammergehäuse (2) erstreckt.

5. Vorkammerzündkerze nach einem der Ansprüche 1 bis 4, **dadurch gekennzeichnet, dass** der Durchgang (11) unmittelbar in die Vorkammer (3) mündet.

6. Vorkammerzündkerze nach einem der Ansprüche 1 bis 5, **dadurch gekennzeichnet, dass** der Durchgang (11) oberhalb der Mittelelektrode (7) in die Vorkammer (3) mündet.

7. Vorkammerzündkerze nach einem der Ansprüche 1 bis 6, **dadurch gekennzeichnet, dass** das Ventil (10) mit einer Zusatzkraftstoffzuführung (9), insbesondere einer Gaszuführung, in Strömungsverbindung steht.

8. Vorkammerzündkerze nach Anspruch 7, **dadurch gekennzeichnet, dass** die Zusatzkraftstoffzuführung (9) als Kapillare ausgebildet ist.

9. Vorkammerzündkerze nach Anspruch 7, **dadurch gekennzeichnet, dass** die Zusatzkraftstoffzuführung (9) durch eine, insbesondere gasbefüllte, Zündkerzenhülse realisiert ist.

10. Vorkammerzündkerze nach einem der Ansprüche 1 bis 9, **dadurch gekennzeichnet, dass** das Vorkammergehäuse (2) aus mindestens zwei Gehäuseteilen (12, 13) besteht.

11. Vorkammerzündkerze nach Anspruch 10, **dadurch gekennzeichnet, dass** der Durchgang (11) ausschließlich in dem mit der Kappe (4) verbundenen Gehäuseteil (13) ausgebildet ist.

## Claims

1. Pre-chamber spark plug for igniting a fuel/air mixture in an internal combustion engine, in particular a gas engine, having a spark plug member (1) which has a pre-chamber housing (2) and a cap (4) which at least partially closes the pre-chamber (3), an earth electrode (5), a central electrode (7) which protrudes into the pre-chamber (3) and a valve (10), wherein additional fuel can be introduced into the pre-chamber (3) via a passage (11), which is constructed in the pre-chamber housing (2) and which is connected to the valve (10) in flow terms,
**characterised in that** the valve (10) adjoins at least the pre-chamber housing (2).

2. Pre-chamber spark plug according to claim 1, **characterised in that** at least a portion of the valve (10) is arranged inside the pre-chamber housing (2).

3. Pre-chamber spark plug according to claim 1 or claim 2, **characterised in that** the valve (10) is arranged completely inside the pre-chamber housing (2).

4. Pre-chamber spark plug according to any one of claims 1 to 3, **characterised in that** the passage (11) extends only through the pre-chamber housing (2).

5. Pre-chamber spark plug according to any one of claims 1 to 4, **characterised in that** the passage (11) opens directly into the pre-chamber (3).

6. Pre-chamber spark plug according to any one of claims 1 to 5, **characterised in that** the passage (11) opens above the central electrode (7) into the pre-chamber (3).

7. Pre-chamber spark plug according to any one of claims 1 to 6, **characterised in that** the valve (10) is connected in flow terms to an additional fuel supply (9), in particular a gas supply.

8. Pre-chamber spark plug according to claim 7, **characterised in that** the additional fuel supply (9) is constructed as a capillary tube.

9. Pre-chamber spark plug according to claim 7, **characterised in that** the additional fuel supply (9) is produced by means of an in particular gas-filled spark plug sleeve.

10. Pre-chamber spark plug according to any one of claims 1 to 9, **characterised in that** the pre-chamber housing (2) comprises at least two housing portions (12, 13).

11. Pre-chamber spark plug according to claim 10, **characterised in that** the passage (11) is constructed exclusively in the housing portion (13) which is connected to the cap (4).

## Revendications

1. Bougie d'allumage d'antichambre pour l'allumage d'un mélange carburant-air dans un moteur à combustion, plus particulièrement dans un moteur à gaz, avec un corps de bougie d'allumage (1), qui comprend un boîtier d'antichambre (2) et un clapet (4) fermant au moins partiellement l'antichambre (3), une électrode de masse (5), une électrode centrale (7) dépassant dans l'antichambre (3) et une soupape (10), dans lequel, par l'intermédiaire d'un passage (11) réalisé dans le boîtier d'antichambre (2) et en liaison d'écoulement avec la soupape (10), du carburant supplémentaire peut être introduit dans l'antichambre (3),
**caractérisée en ce que** la soupape (10) jouxte au moins le boîtier d'antichambre (2).

2. Bougie d'allumage d'antichambre selon la revendication 1, **caractérisée en ce qu'**au moins une partie de la soupape (10) est disposée à l'intérieur du boîtier d'antichambre (2).

3. Bougie d'allumage d'antichambre selon la revendication 1 ou 2, **caractérisée en ce que** la soupape (10) est disposée entièrement à l'intérieur du boîtier d'antichambre (2).

4. Bougie d'allumage d'antichambre selon l'une des revendications 1 à 3, **caractérisée en ce que** le passage (11) s'étend exclusivement à travers le boîtier d'antichambre (2).

5. Bougie d'allumage d'antichambre selon l'une des revendications 1 à 4, **caractérisée en ce que** le passage (11) débouche directement dans l'antichambre (3).

6. Bougie d'allumage d'antichambre selon l'une des revendications 1 à 5, **caractérisée en ce que** le passage (11) débouche au-dessus de l'électrode centrale (7) dans l'antichambre (3).

7. Bougie d'allumage d'antichambre selon l'une des revendications 1 à 6, **caractérisée en ce que** la soupape (10) est en liaison d'écoulement avec une alimentation en carburant supplémentaire (9), plus particulièrement une alimentation en gaz.

8. Bougie d'allumage d'antichambre selon la revendication 7, **caractérisée en ce que** l'alimentation en carburant supplémentaire (9) est conçue sous la forme de capillaires.

9. Bougie d'allumage d'antichambre selon la revendication 7, **caractérisée en ce que** l'alimentation en carburant supplémentaire (9) est réalisée à l'aide d'un manchon de bougie d'allumage, plus particulièrement rempli de gaz.

10. Bougie d'allumage d'antichambre selon l'une des revendications 1 à 9, **caractérisée en ce que** le boîtier d'antichambre (2) est constitué d'au moins deux parties de boîtier (12, 13).

11. Bougie d'allumage d'antichambre selon la revendication 10, **caractérisée en ce que** le passage (11) est réalisé exclusivement dans la partie de boîtier (13) reliée avec le clapet (4).
